(19) Europäisches Patentamt

European Patent Office

Office européen des brevets

(11) **EP 2 589 046 B1**

(12) **EUROPEAN PATENT SPECIFICATION**

(45) Date of publication and mention
of the grant of the patent:
**28.05.2014 Bulletin 2014/22**

(21) Application number: **11743032.2**

(22) Date of filing: **23.06.2011**

(51) Int Cl.:
**G10L 19/26** (2013.01)     **G10L 19/02** (2013.01)
**G10L 19/107** (2013.01)     **G10L 19/20** (2013.01)

(86) International application number:
**PCT/EP2011/060555**

(87) International publication number:
**WO 2012/000882 (05.01.2012 Gazette 2012/01)**

(54) **Selective post filter**

Selektives Nachfilter

Post-filtre sélectif

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.07.2010 US 361237 P**

(43) Date of publication of application:
**08.05.2013 Bulletin 2013/19**

(60) Divisional application:
**14164773.5**

(73) Proprietor: **Dolby International AB
1101 CN Amsterdam Zuid-Oost (NL)**

(72) Inventors:
• **RESCH, Barbara
S-113 30 Stockholm (SE)**
• **KJÖRLING, Kristofer
S-113 30 Stockholm (SE)**
• **VILLEMOES, Lars
S-113 30 Stockholm (SE)**

(74) Representative: **Dolby International AB
Patent Group Europe
Apollo Building, 3E
Herikerbergweg 1-35
1101 CN Amsterdam Zuidoost (NL)**

(56) References cited:
**WO-A1-99/38155     US-A- 6 098 036**

• BARBARA RESCH ET AL: "CE proposal on
improved Bass-post filter operation for the
ACELP of USAC", 93. MPEG MEETING; 26-7-2010
- 30-7-2010; GENEVA; (MOTION PICTURE
EXPERT GROUP OR ISO/IEC JTC1/SC29/WG11),,
no. M17831, 22 July 2010 (2010-07-22),
XP030046421,
• MAX NEUENDORF (EDITOR): "WD7 of USAC", 92.
MPEG MEETING; 19-04-2010 - 23-04-2010;
DRESDEN; (MOTION PICTURE EXPERT GROUP
OR ISO/IEC JTC1/SC29/WG11), no. N11299, 26
April 2010 (2010-04-26), XP000002658193,

**Description**

<u>Technical field</u>

The present invention generally relates to digital audio coding and more precisely to coding techniques for audio signals containing components of different characters.

<u>Background</u>

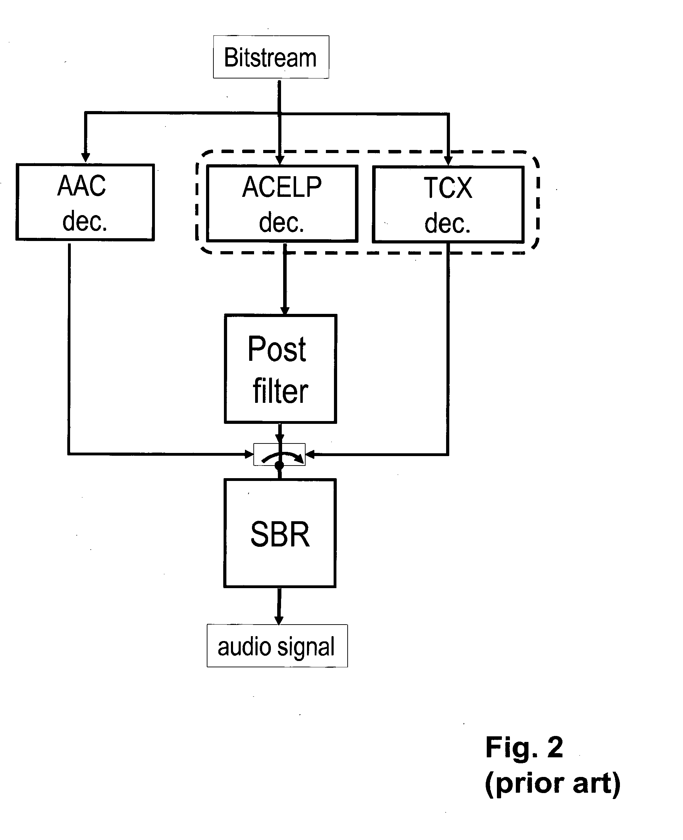

A widespread class of coding method for audio signals containing speech or singing includes *code excited linear prediction* (CELP) applied in time alternation with different coding methods, including frequency-domain coding methods especially adapted for music or methods of a general nature, to account for variations in character between successive time periods of the audio signal. For example, a simplified Moving Pictures Experts Group (MPEG) Unified Speech and Audio Coding (USAC; see standard ISO/IEC 23003-3) decoder is operable in at least three decoding modes, Advanced Audio Coding (AAC; see standard ISO/IEC 13818-7), algebraic CELP (ACELP) and transform-coded excitation (TCX), as shown in the upper portion of accompanying figure 2.

The various embodiments of CELP are adapted to the properties of the human organs of speech and, possibly, to the human auditory sense. As used in this application, CELP will refer to all possible embodiments and variants, including but not limited to ACELP, wide- and narrow-band CELP, SB-CELP (sub-band CELP), low- and high-rate CELP, RCELP (relaxed CELP), LD-CELP (low-delay CELP), CS-CELP (conjugate-structure CELP), CS-ACELP (conjugate-structure ACELP), PSI-CELP (pitch-synchronous innovation CELP) and VSELP (vector sum excited linear prediction). The principles of CELP are discussed by R. Schroeder and S. Atal in Proceedings of the IEEE International Conference on Acoustics, Speech, and Signal Processing (ICASSP), vol. 10, pp. 937-940, 1985, and some of its applications are described in references 25-29 cited in Chen and Gersho, IEEE Transactions on Speech and Audio Processing, vol. 3, no. 1, 1995. As further detailed in the former paper, a CELP decoder (or, analogously, a CELP speech synthesizer) may include a pitch predictor, which restores the periodic component of an encoded speech signal, and an pulse codebook, from which an innovation sequence is added. The pitch predictor may in turn include a long-delay predictor for restoring the pitch and a short-delay predictor for restoring formants by spectral envelope shaping. In this context, the pitch is generally understood as the fundamental frequency of the tonal sound component produced by the vocal chords and further coloured by resonating portions of the vocal tract. This frequency together with its harmonics will dominate speech or singing. Generally speaking, CELP methods are best suited for processing solo or one-part singing, for which the pitch frequency is well-defined and relatively easy to determine.

To improve the perceived quality of CELP-coded speech, it is common practice to combine it with *post filtering* (or *pitch enhancement* by another term). U.S. Patent No. 4 969 192 and section II of the paper by Chen and Gersho disclose desirable properties of such post filters, namely their ability to suppress noise components located between the harmonics of the detected voice pitch (long-term portion; see section IV). It is believed that an important portion of this noise stems from the spectral envelope shaping. The long-term portion of a simple post filter may be designed to have the following transfer function:

$$H_E(z) = 1 + \alpha\left(\frac{z^T + z^{-T}}{2} - 1\right),$$

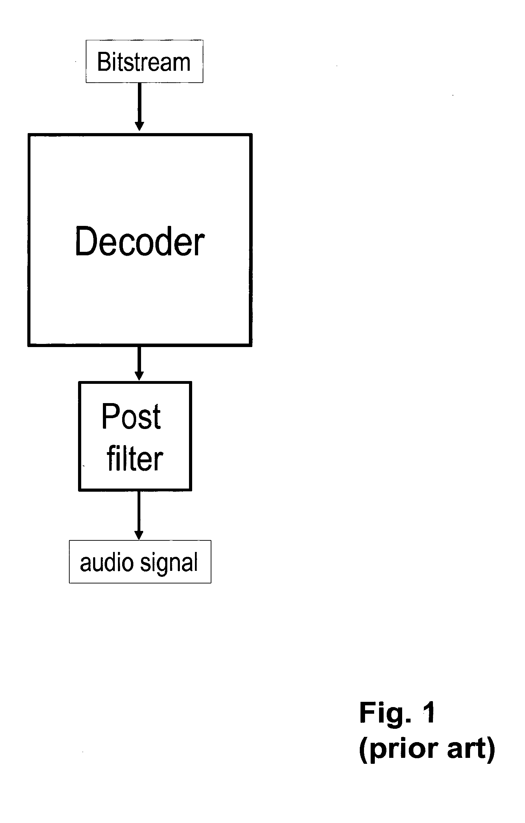

where T is an estimated pitch period in terms of number of samples and $\alpha$ is a gain of the post filter, as shown in figures 1 and 2. In a manner similar to a comb filter, such a filter attenuates frequencies 1/(2T), 3/(2T), 5/(2T), ..., which are located midway between harmonics of the pitch frequency, and adjacent frequencies. The attenuation depends on the value of the gain $\alpha$. Slightly more sophisticated post filters apply this attenuation only to low frequencies - hence the commonly used term bass post filter-where the noise is most perceptible. This can be expressed by cascading the transfer function $H_E$ described above and a low-pass filter $H_{LP}$. Thus, the post-processed decoded $S_E$ provided by the post filter will be given, in the transform domain, by

$$S_E(z) = S(z) - \alpha S(z)P_{LT}(z)H_{LP}(z),$$

where

$$P_{LT}(z) = 1 - \frac{z^T + z^{-T}}{2}$$

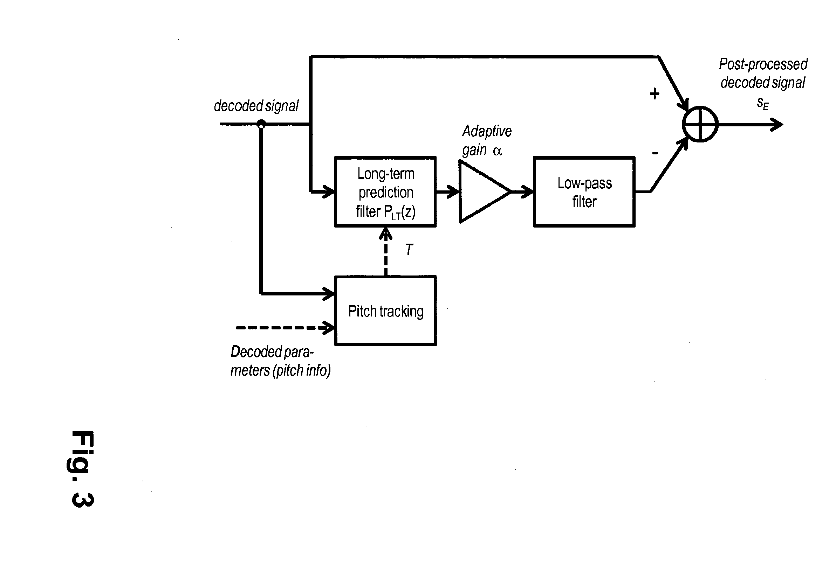

and S is the decoded signal which is supplied as input to the post filter. Figure 3 shows an embodiment of a post filter with these characteristics, which is further discussed in section 6.1.3 of the Technical Specification ETSI TS 126 290, version 6.3.0, release 6. As this figure suggests, the pitch information is encoded as a parameter in the bit stream signal and is retrieved by a pitch tracking module communicatively connected to the long-term prediction filter carrying out the operations expressed by $P_{LT}$.

The long-term portion described in the previous paragraph may be used alone. Alternatively, it is arranged in series with a noise-shaping filter that preserves components in frequency intervals corresponding to the formants and attenuates noise in other spectral regions (short-term portion; see section III), that is, in the 'spectral valleys' of the formant envelope. As another possible variation, this filter aggregate is further supplemented by a gradual high-pass-type filter to reduce a perceived deterioration due to spectral tilt of the short-term portion.

Members of an MPEG standardization committee were able to access the document XP00002658193 [M. Neuendorf (ed.): *WD7 of USAC*, 92th MPEG Meeting, Dresden, N11299] online from 26 April 2010, and the International Preliminary Examining Authority for this application has expressed the view that this document was publicly available from that date. Both XP00002658193 and the International Application published as WO 99/38144 A1 disclose audio processing systems with selective application of post-filtering.

Audio signals containing a mixture of components of different origins-e.g., tonal, non-tonal, vocal, instrumental, non-musical - are not always reproduced by available digital coding technologies in a satisfactory manner. It has more precisely been noted that available technologies are deficient in handling such non-homogeneous audio material, generally favouring one of the components to the detriment of the other. In particular, music containing singing accompanied by one or more instruments or choir parts which has been encoded by methods of the nature described above, will often be decoded with perceptible artefacts spoiling part of the listening experience.

Summary of the invention

In order to mitigate at least some of the drawbacks outlined in the previous section, it is an object of the present invention to provide methods and devices adapted for audio encoding and decoding of signals containing a mixture of components of different origins. As particular objects, the invention seeks to provide such methods and devices that are suitable from the point of view of coding efficiency or (perceived) reproduction fidelity or both.

The invention achieves at least one of these objects as defined in the independent claims. The dependent claims define embodiments of the invention.

The inventors have realized that some artefacts perceived in decoded audio signals of non-homogeneous origin derive from an inappropriate switching between several coding modes of which at least one includes post filtering at the decoder and at least one does not. More precisely, available post filters remove not only interharmonic noise (and, where applicable, noise in spectral valleys) but also signal components representing instrumental or vocal accompaniment and other material of a 'desirable' nature. The fact that the *just noticeable difference* in spectral valleys may be as large as 10 dB (as noted by Ghitza and Goldstein, IEEE Trans. Acoust., Speech, Signal Processing, vol. ASSP-4, pp. 697-708, 1986) may have been taken as a justification by many designers to filter these frequency bands severely. The quality degradation by the interharmonic (and spectral-valley) attenuation itself may however be less important than that of the switching occasions. When the post filter is switched on, the background of a singing voice sounds suddenly muffled, and when the filter is deactivated, the background instantly becomes more sonorous. If the switching takes place frequently, due to the nature of the audio signal or to the configuration of the coding device, there will be a switching artefact. As one example, a USAC decoder may be operable either in an ACELP mode combined with post filtering or in a TCX mode without post filtering. The ACELP mode is used in episodes where a dominant vocal component is present. Thus, the switching into the ACELP mode may be triggered by the onset of singing, such as at the beginning of a new musical phrase, at the beginning of a new verse, or simply after an episode where the accompaniment is deemed to drown the singing voice in the sense that the vocal component is no longer prominent. Experiments have confirmed that an alternative solution, or rather circumvention of the problem, by which TCX coding is used throughout (and the ACELP mode is disabled) does not remedy the problem, as reverb-like artefacts appear.

Accordingly, in a first and a second aspect, the invention provides an audio encoding method (and an audio encoding system with the corresponding features) characterized by a decision being made as to whether the device which will decode the bit stream, which is output by the encoding method, should apply post filtering including attenuation of interharmonic noise. The outcome of the decision is encoded in the bit stream and is accessible to the decoding device.

By the invention, the decision whether to use the post filter is taken separately from the decision as to the most suitable coding mode. This makes it possible to maintain one post filtering status throughout a period of such length that the switching will not annoy the listener. Thus, the encoding method may prescribe that the post filter will be kept inactive even though it switches into a coding mode where the filter is conventionally active.

It is noted that the decision whether to apply post filtering is normally taken frame-wise. Thus, firstly, post filtering is not applied for less than one frame at a time. Secondly, the decision whether to disable post filtering is only valid for the duration of a current frame and may be either maintained or reassessed for the subsequent frame. In a coding format enabling a main frame format and a reduced format, which is a fraction of the normal format, e.g., 1/8 of its length, it may not be necessary to take post-filtering decisions for individual reduced frames. Instead, a number of reduced frames summing up to a normal frame may be considered, and the parameters relevant for the filtering decision may be obtained by computing the mean or median of the reduced frames comprised therein.

In a third and a fourth aspect of the invention, there is provided an audio decoding method (and an audio decoding system with corresponding features) with a decoding step followed by a post-filtering step, which includes interharmonic noise attenuation, and being characterized in a step of disabling the post filter in accordance with post filtering information encoded in the bit stream signal.

A decoding method with these characteristics is well suited for coding of mixed-origin audio signals by virtue of its capability to deactivate the post filter in dependence of the post filtering information only, hence independently of factors such as the current coding mode. When applied to coding techniques wherein post filter activity is conventionally associated with particular coding modes, the post-filtering disabling capability enables a new operative mode, namely the unfiltered application of a conventionally filtered decoding mode.

In a further aspect, the invention also provides a computer program product for performing one of the above methods. Further still, the invention provides a post filter for attenuating interharmonic noise which is operable in either an active mode or a pass-through mode, as indicated by a post-filtering signal supplied to the post filter. The post filter may include a decision section for autonomously controlling the post filtering activity.

As the skilled person will appreciate, an encoder adapted to cooperate with a decoder is equipped with functionally equivalent modules, so as to enable faithful reproduction of the encoded signal. Such equivalent modules may be identical or similar modules or modules having identical or similar transfer characteristics. In particular, the modules in the encoder and decoder, respectively, may be similar or dissimilar processing units executing respective computer programs that perform equivalent sets of mathematical operations.

In one embodiment, encoding the present method includes decision making as to whether a post filter which further includes attenuation of spectral valleys (with respect to the formant envelope, see above). This corresponds to the short-term portion of the post filter. It is then advantageous to adapt the criterion on which the decision is based to the nature of the post filter.

One embodiment is directed to a encoder particularly adapted for speech coding. As some of the problems motivating the invention have been observed when a mixture of vocal and other components is coded, the combination of speech coding and the independent decision-making regarding post filtering afforded by the invention is particularly advantageous. In particular, such a decoder may include a code-excited linear prediction encoding module.

In one embodiment, the encoder bases its decision on a detected simultaneous presence of a signal component with dominant fundamental frequency (pitch) and another signal component located below the fundamental frequency. The detection may also be aimed at finding the co-occurrence of a component with dominant fundamental frequency and another component with energy between the harmonics of this fundamental frequency. This is a situation wherein artefacts of the type under consideration are frequently encountered. Thus, if such simultaneous presence is established, the encoder will decide that post filtering is not suitable, which will be indicated accordingly by post filtering information contained in the bit stream.

One embodiment uses as its detection criterion the total signal power content in the audio time signal below a pitch frequency, possibly a pitch frequency estimated by a long-term prediction in the encoder. If this is greater than a predetermined threshold, it is considered that there are other relevant components than the pitch component (including harmonics), which will cause the post filter to be disabled.

In an encoder comprising a CELP module, use can be made of the fact that such a module estimates the pitch frequency of the audio time signal. Then, a further detection criterion is to check for energy content between or below the harmonics of this frequency, as described in more detail above.

As a further development of the preceding embodiment including a CELP module, the decision may include a comparison between an estimated power of the audio signal when CELP-coded (i.e., encoded and decoded) and an estimated power of the audio signal when CELP-coded and post-filtered. If the power difference is larger than a threshold, which may indicate that a relevant, non-noise component of the signal will be lost, and the encoder will decide to disable the post filter.

In an advantageous embodiment, the encoder comprises a CELP module and a TCX module. As is known in the art, TCX coding is advantageous in respect of certain kinds of signals, notably non-vocal signals. It is not common practice to apply post-filtering to a TCX-coded signal. Thus, the encoder may select either TCX coding, CELP coding with post filtering or CELP coding without post filtering, thereby covering a considerable range of signal types.

As one further development of the preceding embodiment, the decision between the three coding modes is taken on the basis of a rate-distortion criterion, that is, applying an optimization procedure known *per se* in the art.

In another further development of the preceding embodiment, the encoder further comprises an Advanced Audio Coding (AAC) coder, which is also known to be particularly suitable for certain types of signals. Preferably, the decision whether to apply AAC (frequency-domain) coding is made separately from the decision as to which of the other (linear-prediction) modes to use. Thus, the encoder can be apprehended as being operable in two super-modes, AAC or TCX/CELP, in the latter of which the encoder will select between TCX, post-filtered CELP or non-filtered CELP. This embodiment enables processing of an even wider range of audio signal types.

In one embodiment, the encoder can decide that a post filtering at decoding is to be applied gradually, that is, with gradually increasing gain. Likewise, it may decide that post filtering is to be removed gradually. Such gradual application and removal makes switching between regimes with and without post filtering less perceptible. As one example, a singing episode, for which post-filtered CELP coding is found to be suitable, may be preceded by an instrumental episode, wherein TCX coding is optimal; a decoder according to the invention may then apply post filtering gradually at or near the beginning of the singing episode, so that the benefits of post filtering are preserved even though annoying switching artefacts are avoided.

In one embodiment, the decision as to whether post filtering is to be applied is based on an approximate difference signal, which approximates that signal component which is to be removed from a future decoded signal by the post filter. As one option, the approximate difference signal is computed as the difference between the audio time signal and the audio time signal when subjected to (simulated) post filtering. As another option, an encoding section extracts an intermediate decoded signal, whereby the approximate difference signal can be computed as the difference between the audio time signal and the intermediate decoded signal when subjected to post filtering. The intermediate decoded signal may be stored in a long-term prediction buffer of the encoder. It may further represent the excitation of the signal, implying that further synthesis filtering (vocal tract, resonances) would need to be applied to obtain the final decoded signal. The point in using an intermediate decoded signal is that it captures some of the particularities, notably weaknesses, of the coding method, thereby allowing a more realistic estimation of the effect of the post filter. As a third option, a decoding section extracts an intermediate decoded signal, whereby the approximate difference signal can be computed as the difference between the intermediate decoded signal and the intermediate decoded signal when subjected to post filtering. This procedure probably gives a less reliable estimation than the two first options, but can on the other hand be carried out by the decoder in a standalone fashion.

The approximate difference signal thus obtained is then assessed with respect to one of the following criteria, which when settled in the affirmative will lead to a decision to disable the post filter:

a) whether the power of the approximate difference signal exceeds a predetermined threshold, indicating that a significant part of the signal would be removed by the post filter;
b) whether the character of the approximate difference signal is rather tonal than noise-like;
c) whether a difference between magnitude frequency spectra of the approximate difference signal and of the audio time signal is unevenly distributed with respect to frequency, suggesting that it is not noise but rather a signal that would make sense to a human listener;
d) whether a magnitude frequency spectrum of the approximate difference signal is localized to frequency intervals within a predetermined relevance envelope, based on what can usually be expected from a signal of the type to be processed; and
e) whether a magnitude frequency spectrum of the approximate difference signal is localized to frequency intervals within a relevance envelope obtained by thresholding a magnitude frequency spectrum of the audio time signal by a magnitude of the largest signal component therein downscaled by a predetermined scale factor.

When evaluating criterion e), it is advantageous to apply peak tracking in the magnitude spectrum, that is, to distinguish portions having peak-like shapes normally associated with tonal components rather than noise. Components identified by peak tracking, which may take place by some algorithm known *per se* in the art, may be further sorted by applying a threshold to the peak height, whereby the remaining components are tonal material of a certain magnitude. Such components usually represent relevant signal content rather than noise, which motivates a decision to disable the post filter.

In one embodiment of the invention as a decoder, the decision to disable the post filter is executed by a switch controllable by the control section and capable of bypassing the post filter in the circuit. In another embodiment, the post filter has variable gain controllable by the control section, or a gain controller therein, wherein the decision to disable is carried out by setting the post filter gain (see previous section) to zero or by setting its absolute value below a predetermined threshold.

In one embodiment, decoding according to the present invention includes extracting post filtering information from the bit stream signal which is being decoded. More precisely, the post filtering information may be encoded in a data field comprising at least one bit in a format suitable for transmission. Advantageously, the data field is an existing field defined by an applicable standard but not in use, so that the post filtering information does not increase the payload to be transmitted.

It is noted that the methods and apparatus disclosed in this section may be applied, after appropriate modifications within the skilled person's abilities including routine experimentation, to coding of signals having several components, possibly corresponding to different channels, such as stereo channels. Throughout the present application, pitch enhancement and post filtering are used as synonyms. It is further noted that AAC is discussed as a representative example of frequency-domain coding methods. Indeed, applying the invention to a decoder or encoder operable in a frequency-domain coding mode other than AAC will only require small modifications, if any, within the skilled person's abilities. Similarly, TCX is mentioned as an example of weighted linear prediction transform coding and of transform coding in general.

Features from two or more embodiments described hereinabove can be combined, unless they are clearly complementary, in further embodiments. The fact that two features are recited in different claims does not preclude that they can be combined to advantage. Likewise, further embodiments can also be provided by the omission of certain features that are not necessary or not essential for the desired purpose.

Brief description of the drawings

Embodiments of the present invention will now be described with reference to the accompanying drawings, on which:

figures 1 is a block diagram showing a conventional decoder with post filter;
figure 2 is a schematic block diagram of a conventional decoder operable in AAC, ACELP and TCX mode and including a post filter permanently connected downstream of the ACELP module;
figure 3 is a block diagram illustrating the structure of a post filter;
figures 4 and 5 are block diagrams of two decoders according to the invention;
figure 6 and 7 are block diagrams illustrating differences between a conventional decoder (figure 6) and a decoder (figure 7) according to the invention;
figure 8 is a block diagram of an encoder according to the invention;
figures 9 and 10 are a block diagrams illustrating differences between a conventional decoder (figure 9) and a decoder (figure 10) according to the invention; and
figure 11 is a block diagram of an autonomous post filter which can be selectively activated and deactivated.

Detailed description of embodiments

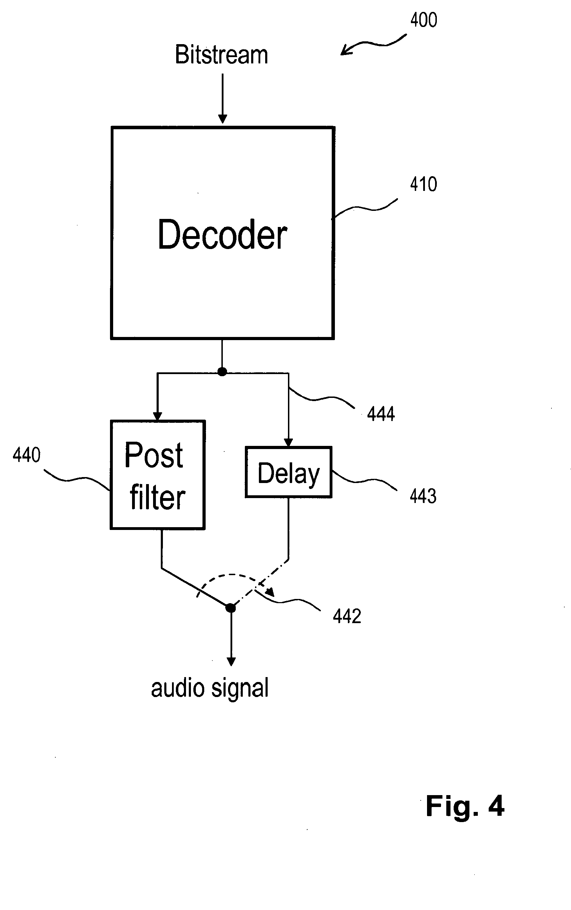

Figure 4 is a schematic drawing of a decoder system 400 according to an embodiment of the invention, having as its input a bit stream signal and as its output an audio signal. As in the conventional decoders shown in figure 1, a post filter 440 is arranged downstream of a decoding module 410 but can be switched into or out of the decoding path by operating a switch 442. The post filter is enabled in the switch position shown in the figure. It would be disabled if the switch was set in the opposite position, whereby the signal from the decoding module 410 would instead be conducted over the bypass line 444. As an inventive contribution, the switch 442 is controllable by post filtering information contained in the bit stream signal, so that post filtering may be applied and removed irrespectively of the current status of the decoding module 410. Because a post filter 440 operates at some delay - for example, the post filter shown in figure 3 will introduce a delay amounting to at least the pitch period T - a compensation delay module 443 is arranged on the bypass line 444 to maintain the modules in a synchronized condition at switching. The delay module 443 delays the signal by the same period as the post filter 440 would, but does not otherwise process the signal. To minimize the change-over time, the compensation delay module 443 receives the same signal as the post filter 440 at all times. In an alternative embodiment where the post filter 440 is replaced by a zero-delay post filter (e.g., a causal filter, such as a filter with two taps, independent of future signal values), the compensation delay module 443 can be omitted.

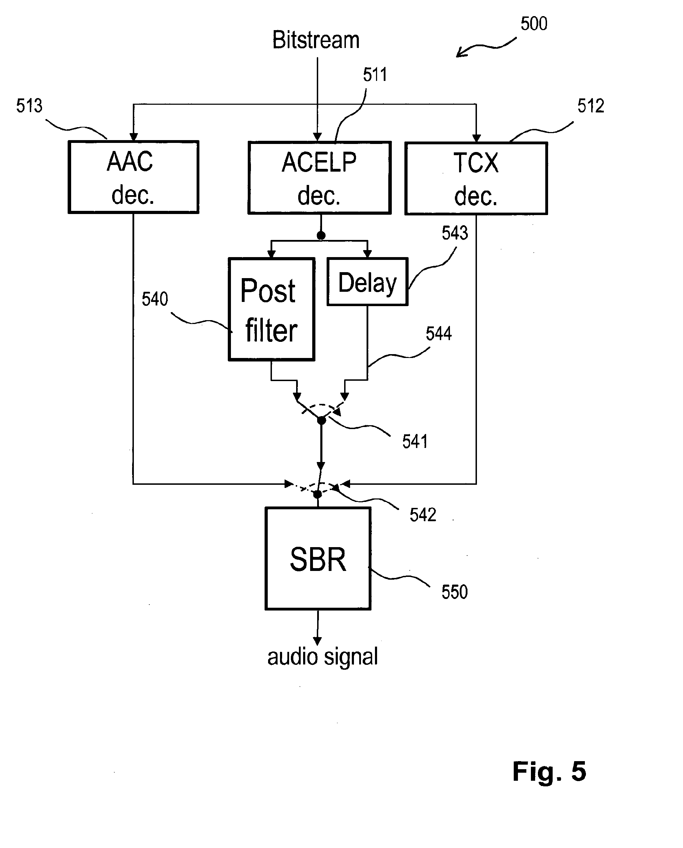

Figure 5 illustrates a further development according to the teachings of the invention of the triple-mode decoder system 500 of figure 2. An ACELP decoding module 511 is arranged in parallel with a TCX decoding module 512 and an AAC decoding module 513. In series with the ACELP decoding module 511 is arranged a post filter 540 for attenuating noise, particularly noise located between harmonics of a pitch frequency directly or indirectly derivable from the bit stream signal for which the decoder system 500 is adapted. The bit stream signal also encodes post filtering information governing the positions of an upper switch 541 operable to switch the post filter 540 out of the processing path and replace it with a compensation delay 543 like in figure 4. A lower switch 542 is used for switching between different decoding modes. With this structure, the position of the upper switch 541 is immaterial when one of the TCX or AAC modules 512, 513 is used; hence, the post filtering information does not necessary indicate this position except in the ACELP mode. Whatever decoding mode is currently used, the signal is supplied from the downstream connection point of the lower switch 542 to a spectral band replication (SBR) module 550, which outputs an audio signal. The skilled person will realize that the drawing is of a conceptual nature, as is clear notably from the switches which are shown schematically as separate physical entities with movable contacting means. In a possible realistic implementation of the decoder system, the switches as well as the other modules will be embodied by computer-readable instructions.

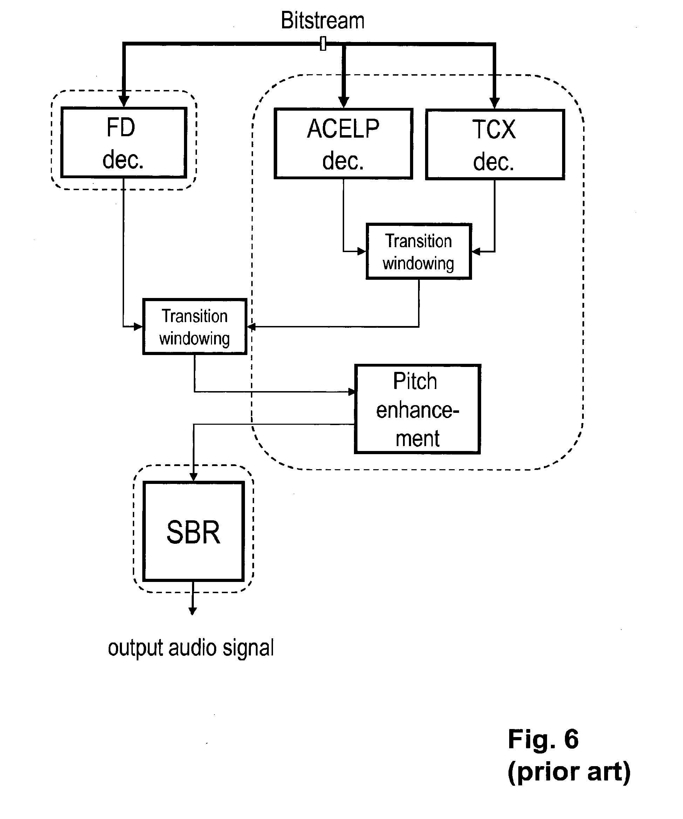

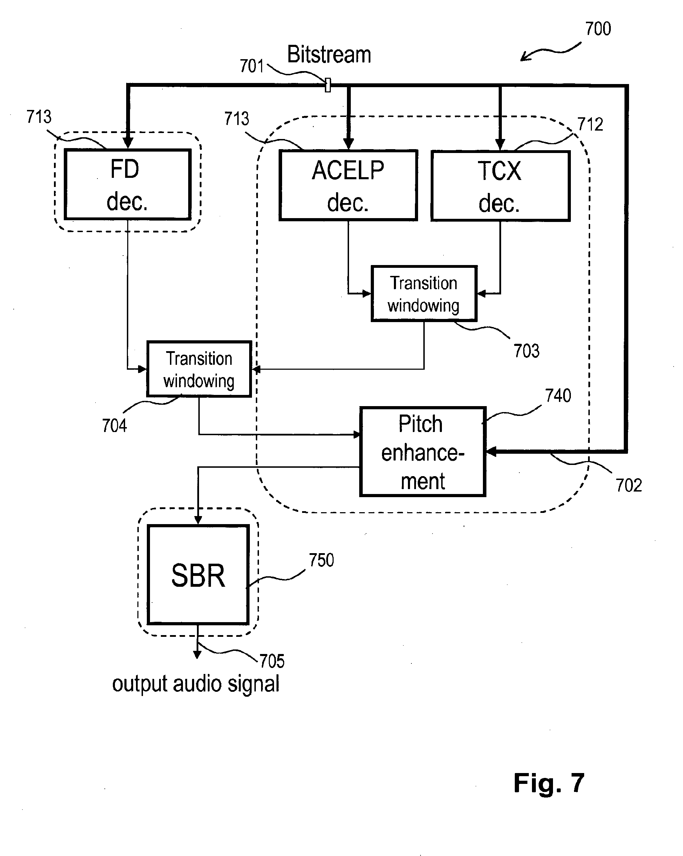

Figures 6 and 7 are also block diagrams of two triple-mode decoder systems operable in an ACELP, TCX or frequency-domain decoding mode. With reference to the latter figure, which shows an embodiment of the invention, a bit stream signal is supplied to an input point 701, which is in turn permanently connected via respective branches to the three decoding modules 711, 712, 713. The input point 701 also has a connecting branch 702 (not present in the conventional decoding system of figure 6) to a pitch enhancement module 740, which acts as a post filter of the general type described above. As is common practice in the art, a first transition windowing module 703 is arranged downstream of the ACELP and TCX modules 711, 712, to carry out transitions between the decoding modules. A second transition module 704 is arranged downstream of the frequency-domain decoding module 713 and the first transition windowing module 703, to carry out transition between the two super-modes. Further a SBR module 750 is provided immediately upstream of the output point 705. Clearly, the bit stream signal is supplied directly (or after demultiplexing, as appropriate) to all three decoding modules 711, 712, 713 and to the pitch enhancement module 740. Information contained in the bit stream controls what decoding module is to be active. By the invention however, the pitch enhancement module 740 performs an analogous self actuation , which responsive to post filtering information in the bit stream may act as a post filter or simply as a pass-through. This may for instance be realized through the provision of a control section (not shown) in the pitch enhancement module 740, by means of which the post filtering action can be turned on or off. The pitch enhancement module 740 is always in its pass-through mode when the decoder system operates in the frequency-domain or TCX decoding mode, wherein strictly speaking no post filtering information is necessary. It is understood that modules not forming part of the inventive contribution and whose presence is obvious to the skilled person, e.g., a demultiplexer, have been omitted from figure 7 and other similar drawings to increase clarity.

As a variation, the decoder system of figure 7 may be equipped with a control module (not shown) for deciding whether post filtering is to be applied using an analysis-by-synthesis approach. Such control module is communicatively connected to the pitch enhancement module 740 and to the ACELP module 711, from which it extracts an intermediate decoded signal $s_{i-DEC}(n)$ representing an intermediate stage in the decoding process, preferably one corresponding to the excitation of the signal. The detection module has the necessary information to simulate the action of the pitch enhancement module 740, as defined by the transfer functions $P_{LT}(z)$ and $H_{LP}(z)$ (cf. *Background* section and figure 3), or equivalently their filter impulse responses $p_{LT}(z)$ and $h_{LP}(n)$. As follows by the discussion in the *Background* section, the component to be subtracted at post filtering can be estimated by an approximate difference signal $s_{AD}(n)$ which is proportional to $[(s_{i-DEC} * P_{LT}) * h_{L}p](n)$, where * denotes discrete convolution. This is an approximation of the true difference between the original audio signal and the post-filtered decoded signal, namely

$$s_{ORIG}(n) - s_E(n) = s_{ORIG}(n) - (s_{DEC}(n) - \alpha[s_{DEC} * p_{LT} * h_{LP}](n)),$$

where $\alpha$ is the post filter gain. By studying the total energy, low-band energy, tonality, actual magnitude spectrum or past magnitude spectra of this signal, as disclosed in the *Summary* section and the claims, the control section may find a basis for the decision whether to activate or deactivate the pitch enhancement module 740.

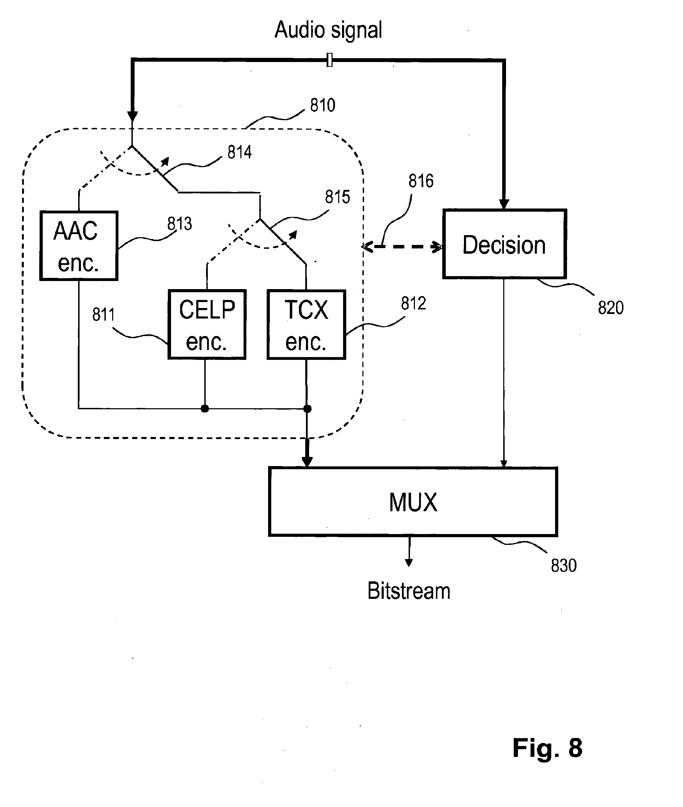

Figure 8 shows an encoder system 800 according to an embodiment of the invention. The encoder system 800 is adapted to process digital audio signals, which are generally obtained by capturing a sound wave by a microphone and transducing the wave into an analog electric signal. The electric signal is then sampled into a digital signal susceptible to be provided, in a suitable format, to the encoder system 800. The system generally consists of an encoding module 810, a decision module 820 and a multiplexer 830. By virtue of switches 814, 815 (symbolically represented), the encoding module 810 is operable in either a CELP, a TCX or an AAC mode, by selectively activating modules 811, 812, 813. The decision module 820 applies one or more predefined criteria to decide whether to disable post filtering during decoding of a bit stream signal produced by the encoder system 800 to encode an audio signal. For this purpose, the decision module 820 may examine the audio signal directly or may receive data from the encoding module 810 via a connection line 816. A signal indicative of the decision taken by the decision module 820 is provided, together with the encoded audio signal from the encoding module 810, to a multiplexer 830, which concatenates the signals into a bit stream constituting the output of the encoder system 800.

Preferably, the decision module 820 bases its decision on an approximate difference signal computed from an intermediate decoded signal $s_{i\_DEC}$, which can be subtracted from the encoding module 810. The intermediate decoded signal represents an intermediate stage in the *decoding* process, as discussed in preceding paragraphs, but may be extracted from a corresponding stage of the *encoding* process. However, in the encoder system 800 the original audio signal $s_{ORIG}$ is available so that, advantageously, the approximate difference signal is formed as:

$$s_{ORIG}(n) - (s_{i\_DEC}(n) - \alpha \; [(s_{i\_DEC} * p_{LT}) * h_{LP}](n)).$$

The approximation resides in the fact that the intermediate decoded signal is used in lieu of the final decoded signal. This enables an appraisal of the nature of the component that a post filter would remove at decoding, and by applying one of the criteria discussed in the *Summary* section, the decision module 820 will be able to take a decision whether to disable post filtering.

As a variation to this, the decision module 820 may use the original signal in place of an intermediate decoded signal, so that the approximate difference signal will be $[(s_{i\_DEC} * p_{LT}) * h_{LP}](n)$. This is likely to be a less faith-ful approximation but on the other hand makes the presence of a connection line 816 between the decision module 820 and the encoding module 810 optional.

In such other variations of this embodiment where the decision module 820 studies the audio signal directly, one or more of the following criteria may be applied:

- Does the audio signal contain both a component with dominant fundamental frequency and a component located below the fundamental frequency? (The fundamental frequency may be supplied as a byproduct of the encoding module 810.)
- Does the audio signal contain both a component with dominant fundamental frequency and a component located between the harmonics of the fundamental frequency?
- Does the audio signal contain significant signal energy below the fundamental frequency?
- Is post-filtered decoding (likely to be) preferable to unfiltered decoding with respect to rate-distortion optimality?

In all the described variations of the encoder structure shown in figure 8 - that is, irrespectively of the basis of the detection criterion - the decision section 820 may be enabled to decide on a gradual onset or gradual removal of post filtering, so as to achieve smooth transitions. The gradual onset and removal may be controlled by adjusting the post filter gain.

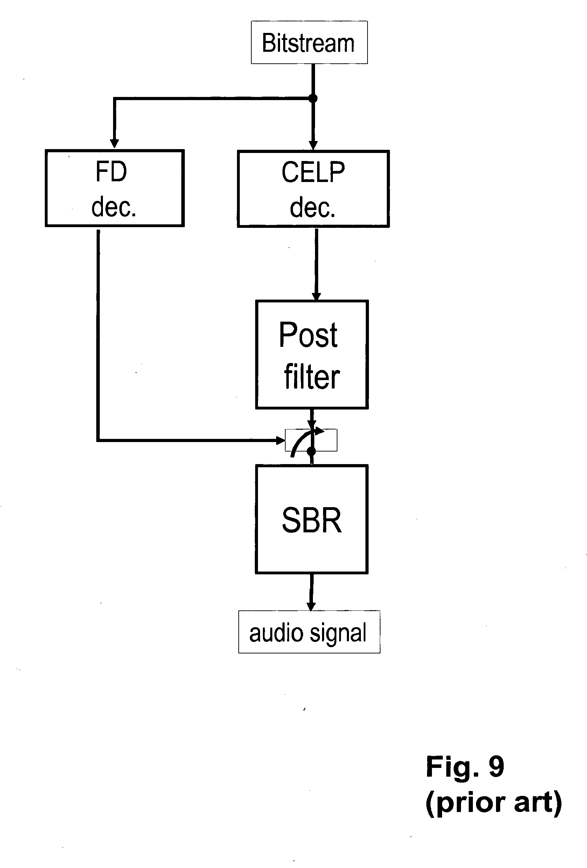

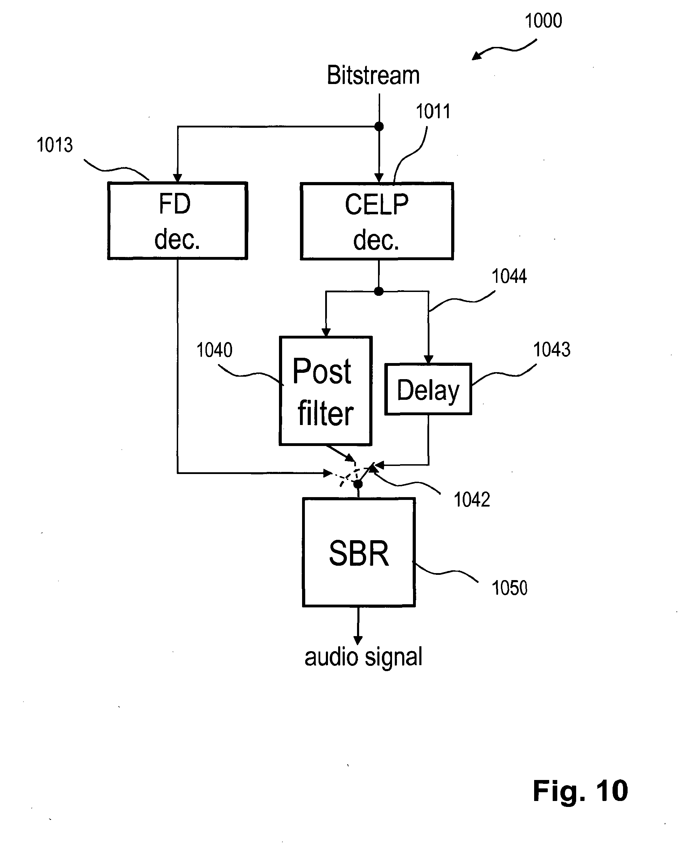

Figure 9 shows a conventional decoder operable in a frequency-decoding mode and a CELP decoding mode depending on the bit stream signal supplied to the decoder. Post filtering is applied whenever the CELP decoding mode is selected. An improvement of this decoder is illustrated in figure 10, which shows an decoder 1000 according to an embodiment of the invention. This decoder is operable not only in a frequency-domain-based decoding mode, wherein the frequency-domain decoding module 1013 is active, and a filtered CELP decoding mode, wherein the CELP decoding module 1011 and the post filter 1040 are active, but also in an unfiltered CELP mode, in which the CELP module 1011 supplies its signal to a compensation delay module 1043 via a bypass line 1044. A switch 1042 controls what decoding mode is currently used responsive to post filtering information contained in the bit stream signal provided to the decoder 1000. In this decoder and that of figure 9, the last processing step is effected by an SBR module 1050, from which the final audio signal is output.

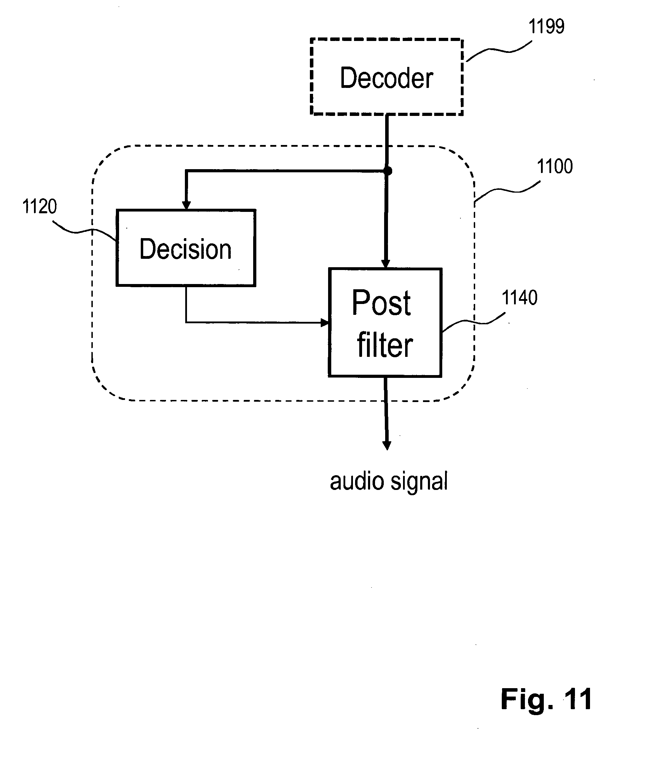

Figure 11 shows a post filter 1100 suitable to be arranged downstream of a decoder 1199. The filter 1100 includes a post filtering module 1140, which is enabled or disabled by a control module (not shown), notably a binary or non-binary gain controller, in response to a post filtering signal received from a decision module 1120 within the post filter 1100. The decision module performs one or more tests on the signal obtained from the decoder to arrive at a decision whether the post filtering module 1140 is to be active or inactive. The decision may be taken along the lines of the functionality of the decision module 820 in figure 8, which uses the original signal and/or an intermediate decoded signal to predict the action of the post filter. The decision of the decision module 1120 may also be based on similar information as the decision modules uses in those embodiments where an intermediate decoded signal is formed. As one example, the decision module 1120 may estimate a pitch frequency (unless this is readily extractable from the bit stream signal) and compute the energy content in the signal below the pitch frequency and between its harmonics. If this energy content is significant, it probably represents a relevant signal component rather than noise, which motivates a decision to disable the post filtering module 1140.

A 6-person listening test has been carried out, during which music samples encoded and decoded according to the invention were compared with reference samples containing the same music coded while applying post filtering in the conventional fashion but maintaining all other parameters unchanged. The results confirm a perceived quality improvement.

Further embodiments of the present invention will become apparent to a person skilled in the art after reading the description above. Even though the present description and drawings disclose embodiments and examples, the invention is not restricted to these specific examples. Numerous modifications and variations can be made without departing from the scope of the present invention, which is defined by the accompanying claims.

The systems and methods disclosed hereinabove may be implemented as software, firmware, hardware or a combination thereof. Certain components or all components may be implemented as software executed by a digital signal processor or microprocessor, or be implemented as hardware or as an application-specific integrated circuit. Such software may be distributed on computer readable media, which may comprise computer storage media (or non-transitory media) and communication media (or transitory media). As is well known to a person skilled in the art, computer storage media includes both volatile and nonvolatile, removable and non-removable media implemented in any method or technology for storage of information such as computer readable instructions, data structures, program modules or other data. Computer storage media includes, but is not limited to, RAM, ROM, EE-PROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by a computer. Further, it is well known to the skilled person that communication media typically embodies computer readable instructions, data structures, program modules or other data in a modulated data signal such as a carrier wave or other transport mechanism and includes any information delivery media.

## Claims

**1.** An interharmonic noise attenuation post filter (440; 550; 740; 1040; 1140) adapted to receive an input signal, which comprises a preliminary audio signal decoded according to one of a plurality of decoding modes, wherein post-filter activity is conventionally associated with particular decoding modes, and to supply an output audio signal, the interharmonic noise attenuation post filter further comprising a control section for selectively operating the post filter in one of the following modes:

   i) a filtering mode, wherein it filters the preliminary audio signal to obtain a filtered signal and supplies this as output audio signal; and
   ii) a pass-through mode, wherein it supplies the preliminary audio signal as output audio signal,

   said control section being configured to enter the pass-through mode in response to the value of a post-filtering signal, whereby a conventionally filtered decoding mode is applied unfiltered.

**2.** The post filter of claim 1, wherein the post-filtering signal is included in the input signal.

**3.** The post filter of claim 1, further comprising a decision module (1120) adapted to estimate a pitch frequency of the preliminary audio signal and to assess at least one of the following criteria:

   a) whether the power of spectral components below the pitch frequency exceeds a predetermined threshold;
   b) whether spectral components below the pitch frequency are tonal;
   c) whether the power of spectral components between harmonics of the pitch frequency exceed a predetermined threshold; and
   d) whether spectral components between harmonics of the pitch frequency are tonal;

   and, responsive to a positive determination, to take a decision to generate a negative post-filtering signal disabling the post filter.

**4.** A decoder system (400; 500; 700; 1000) for decoding a bit stream signal as an audio time signal, including:

   a decoding section (410; 511, 512, 513; 711, 712, 713; 1011, 1013) for decoding a bit stream signal as a preliminary audio time signal; and
   the interharmonic noise attenuation post filter of any of claims 1 to 3.

**5.** The decoder system of claim 4,
   wherein the post filter has variable gain determining the interharmonic attenuation and the control section includes a gain controller operable to set the absolute value of the gain below a predetermined threshold, whereby the post filter is disabled.

**6.** The decoder system of claim 4 or 5,

wherein the post filter is adapted to attenuate only such spectral components which are located below a predetermined cut-off frequency.

7. The decoder system of claim 4,
the decoding section further comprising a code-excited linear prediction, CELP, decoding module (511; 711; 1011) and a transform-coded excitation, TCX, decoding module (512; 712) for decoding a bit stream signal as an audio time signal,
the control section being adapted operate the decoder system in at least the following modes:

a) the TCX module is enabled and the post filter is disabled;
b) the CELP module and the post filter are enabled; and
c) the CELP module is enabled and the post filter is disabled, wherein the preliminary audio time signal and the audio time signal coincide.

8. The decoder system of claim 6,
the decoding section further comprising an Advanced Audio Coding, AAC, decoding module (513; 713) for decoding a bit stream signal as an audio time signal,
the control section being adapted to operate the decoder also in the following mode:

d) the AAC module is enabled and the post filter is disabled.

9. The decoder system of claim 4,
wherein the bit stream signal is a Moving Pictures Experts Group, MPEG, bit stream and is segmented into time frames and the control section is adapted to disable an entire time frame or a sequence of entire time frames; and the control section is further adapted to receive, for each time frame, a data field associated with this time frame and is operable, responsive to the value of the data field, to disable the post filter, whereby the preliminary audio time signal is output as the audio time signal.

10. A method of decoding a bit stream signal as an audio time signal, including the steps of:

decoding a bit stream signal as a preliminary audio time signal in one of a plurality of decoding modes, wherein post-filter activity is conventionally associated with particular decoding modes; and
post-filtering the preliminary audio time signal by attenuating interharmonic noise, thereby obtaining an audio time signal,
**characterized in that** the post-filtering step is selectively omitted responsive to post-filtering information encoded in the bitstream signal, whereby a conventionally filtered decoding mode is applied unfiltered.

11. An encoder system (800) for encoding an audio time signal as a bit stream signal, including an encoding section (810) operable in several coding modes, for encoding an audio time signal as a bit stream signal,
**characterized by** a decision section (820) adapted to decide whether post filtering, which includes attenuation of interharmonic noise, is to be disabled at decoding of the bit stream signal separately from deciding on the coding mode and to encode this decision in the bit stream signal as post filtering information.

12. The encoder system of claim 11,
the decision section being adapted to:

detect a co-presence of a signal component with dominant fundamental frequency and a signal component located below the fundamental frequency and, optionally, between its harmonics; and
responsive to a positive determination, to take a decision to disable.

13. The encoder system of claim 11,
further comprising a code-excited linear prediction, CELP, encoding module,
said encoding section further including a transform-coded excitation, TCX, encoding module,
wherein the decision section is adapted to select one of the following coding modes, preferably on the basis of a rate-distortion optimization:

a) TCX coding;
b) CELP coding with post filtering; and

c) CELP coding without post filtering,

the encoder system further comprising a coding selector (814) adapted to select one of the following super-modes:

    i) Advanced Audio Coding, AAC coding, wherein the decision section is disabled; and
    ii) TCX/CELP coding, wherein the decision section is enabled to select one of coding modes a), b) and c).

**14.** A method of encoding an audio time signal as a bit stream signal, the method including the step of encoding an audio time signal as a bit stream signal in one of several coding modes,
**characterized by** the further step of deciding whether post filtering, which includes attenuation of interharmonic noise, is to be disabled at decoding of the bit stream signal separately from deciding on the coding mode and encoding this decision in the bit stream signal as post filtering information.

**15.** A computer-program product including a data carrier storing instructions for performing the method of claim 10 or 14.

## Patentansprüche

**1.** Postfilter zum Dämpfen von interharmonischen Geräuschen (440; 550; 740; 1040; 1140), das ausgelegt ist, ein Eingangssignal zu empfangen, das ein vorläufiges Audiosignal umfasst, das gemäß einer von mehreren Decodierbetriebsarten decodiert wurde, wobei die Postfilteraktivität konventionell bestimmten Decodierbetriebsarten zugeordnet ist, und ein Ausgangsaudiosignal zu liefern,
wobei das Postfilter zum Dämpfen von interharmonischen Geräuschen ferner Folgendes umfasst:

    einen Steuerabschnitt, um das Postfilter wahlweise in einer der folgenden Betriebsarten zu betreiben:

        i) einer Filterbetriebsart, in der es das vorläufige Audiosignal filtert, um ein gefiltertes Signal zu erzeugen, und dieses als Ausgangssignal liefert; und
        ii) eine Durchlassbetriebsart, in der es das vorläufige Audiosignal als das Ausgangsaudiosignal liefert,

    wobei der Steuerabschnitt konfiguriert ist, als Reaktion auf den Wert eines Postfiltersignals in die Durchlassbetriebsart einzutreten, wodurch eine konventionell gefilterte Decodierbetriebsart ungefiltert angewendet wird.

**2.** Postfilter nach Anspruch 1, wobei das Postfiltersignal in dem Eingangssignal enthalten ist.

**3.** Postfilter nach Anspruch 1, das ferner ein Entscheidungsmodul (1120) umfasst, das ausgelegt ist, eine Grundfrequenz des vorläufigen Audiosignals zu schätzen und mindestens eines der folgenden Kriterien zu bewerten:

    a) ob die Leistung der spektralen Komponenten unter der Grundfrequenz einen vorgegebenen Schwellenwert überschreitet;
    b) ob die spektralen Komponenten unter der Grundfrequenz tonal sind;
    c) ob die Leistung der spektralen Komponenten zwischen Harmonischen der Grundfrequenz einen vorgegebenen Schwellenwert überschreitet; und
    d) ob die spektralen Komponenten zwischen Harmonischen der Grundfrequenz tonal sind;

    und als Reaktion auf eine positive Bestimmung eine Entscheidung zu treffen, ein negatives Postfiltersignal zu erzeugen, das das Postfilter deaktiviert.

**4.** Decodiersystem (400; 500; 700; 1000) zum Decodieren eines Bitstromsignals als ein Audiozeitsignal, das Folgendes enthält:

    einen Decodierabschnitt (410; 511, 512, 513; 711, 712, 713; 1011, 1013) zum Decodieren eines Bitstromsignals als ein vorläufiges Audiozeitsignal; und
    das Postfilter zum Dämpfen von interharmonischen Geräuschen nach einem der Ansprüche 1 bis 3.

**5.** Decodiersystem nach Anspruch 4,
wobei das Postfilter eine variable Verstärkung besitzt, die die interharmonische Dämpfung bestimmt und der Steuerabschnitt eine Verstärkersteuereinheit enthält, die betreibbar ist, den absoluten Wert der Verstärkung unter einen vorgegebenen Schwellenwert einzustellen, wodurch das Postfilter deaktiviert wird.

6. Decodiersystem nach Anspruch 4 oder 5,
wobei das Postfilter ausgelegt ist, nur solche spektralen Komponenten zu dämpfen, die sich unter einer vorgegebenen Grenzfrequenz befinden.

7. Decodiersystem nach Anspruch 4,
wobei der Decodierabschnitt ferner ein codeangeregtes Linearprädiktions-Decodiermodul (CELP-Modul) (511; 711; 1011) und ein transformationscodiertes Anregungs-Decodiermodul (TCX-Decodiermodul) (512; 712) umfasst, um ein Bitstromsignal als ein Audiozeitsignal zu decodieren,
wobei der Steuerabschnitt ausgelegt ist, das Decodiersystem zumindest in den folgenden Betriebsarten zu betreiben:

a) das TCX-Modul ist aktiviert und das Postfilter ist deaktiviert;
b) das CELP-Modul und das Postfilter sind aktiviert; und
c) das CELP-Modul ist aktiviert und das Postfilter ist deaktiviert, wobei das vorläufige Audiozeitsignal und das Audiozeitsignal übereinstimmen.

8. Decodiersystem, nach Anspruch 6,
wobei der Decodierabschnitt ferner ein "Advanced Audio Coding"-Decodiermodul (AAC-Decodiermodul) (513; 713) umfasst, um ein Bitstromsignal als ein Audiozeitsignal zu decodieren,
wobei der Steuerabschnitt ausgelegt ist, den Decodierer auch in der folgenden Betriebsart zu betreiben:

d) das AAC-Modul ist aktiviert und das Postfilter ist deaktiviert.

9. Decodiersystem nach Anspruch 4,
wobei das Bitstromsignal ein "Moving Pictures Experts Group"-Bitstrom (MPEG-Bitstrom) ist und in Zeitrahmen segmentiert ist und der Steuerabschnitt ausgelegt ist, einen gesamten Zeitrahmen oder eine Sequenz von gesamten Zeitrahmen zu deaktivieren; und
der Steuerabschnitt ferner ausgelegt ist, für jeden Zeitrahmen ein Datenfeld, das diesem Zeitrahmen zugeordnet ist, zu empfangen, und betreibbar ist, als Reaktion auf den Wert des Datenfeldes das Postfilter zu deaktivieren, wodurch das vorläufige Audiozeitsignal als das Audiozeitsignal ausgegeben wird.

10. Verfahren zum Decodieren eines Bitstromsignals als ein Audiozeitsignal, das die folgenden Schritte umfasst:

Decodieren eines Bitstromsignals als ein vorläufiges Audiozeitsignal in einer von mehreren Decodierbetriebsarten, wobei die Postfilteraktivität konventionell einer bestimmten Decodierbetriebsart zugeordnet ist, und Postfiltern des vorläufigen Audiozeitsignals durch Dämpfen von interharmonischen Geräuschen, wodurch ein Audiozeitsignal erhalten wird,
**dadurch gekennzeichnet, dass** der Postfilterschritt wahlweise in Reaktion auf die Postfilterinformationen, die in dem Bitstromsignal codiert sind, ausgelassen wird, wodurch eine konventionell gefilterte Decodierbetriebsart ungefiltert angewendet wird.

11. Codiersystem (800) zum Codieren eines Audiozeitsignals als ein Bitstromsignal, das einen Codierabschnitt (810) enthält, der in mehreren Codierbetriebsarten betreibbar ist, um ein Audiozeitsignal als ein Bitstromsignal zu codieren,
**gekennzeichnet durch** einen Entscheidungsabschnitt (820), der ausgelegt ist, getrennt von dem Entscheiden über die Codierbetriebsart zu entscheiden, ob ein Postfiltern, das das Dämpfen der interharmonischen Geräusche enthält, beim Decodieren des Bitstromsignal zu deaktivieren ist, und diese Entscheidung in das Bitstromsignal als Postfilterinformationen zu codieren.

12. Codiersystem nach Anspruch 11,
wobei der Entscheidungsabschnitt ausgelegt ist:

eine gleichzeitige Anwesenheit einer Signalkomponente mit einer dominanten Grundfrequenz und einer Signalkomponente, die sich unter der Grundfrequenz und optional zwischen seinen Harmonischen befindet, zu detektieren; und
als Reaktion auf eine positive Bestimmung eine Entscheidung zu treffen, zu deaktivieren.

13. Codiersystem nach Anspruch 11,

das ferner ein codeangeregtes Linearprädiktions-Codiermodul (CELP-Codiermodul) umfasst,
wobei der Codierabschnitt ferner ein transformationscodiertes Anregungs-Codiermodul (TCX-Modul) enthält,
wobei der Entscheidungsabschnitt ausgelegt ist, eine der folgenden Codierbetriebsarten vorzugsweise aufgrund einer Ratenverzerrungs-Optimierung auszuwählen:

    a) TCX-Codierung;
    b) CELP-Codierung mit Postfiltern; und
    c) CELP-Codierung ohne Postfiltern,

wobei das Codiersystem ferner einen Codierselektor (814) umfasst, der ausgelegt ist, eine der folgenden Superbetriebsarten auszuwählen:

    i) "Advanced Audio"-Codieren (AAC-Codieren), wobei der Entscheidungsabschnitt deaktiviert ist; und
    ii) TCX/CELP-Codieren, wobei der Entscheidungsabschnitt aktiviert ist, eine der Codierbetriebsarten a), b) und c) auszuwählen.

**14.** Verfahren zum Codieren eines Audiozeitsignals als ein Bitstromsignal, wobei das Verfahren den Schritt enthält, ein Audiozeitsignal als ein Bitstromsignal in einer von mehreren Codierbetriebsarten zu codieren, **gekennzeichnet durch** den weiteren Schritt, getrennt von dem Entscheiden über die Codierbetriebsart zu entscheiden, ob das Postfiltern, das eine Dämpfung der interharmonischen Geräusche enthält, beim Decodieren des Bitstromsignals zu deaktivieren ist, und diese Entscheidung in das Bitstromsignal als Postfilterinformationen zu codieren.

**15.** Computerprogrammprodukt, das Datenträgerspeicheranweisungen enthält, um das Verfahren nach Anspruch 10 oder 14 auszuführen.

### Revendications

**1.** Post-filtre d'atténuation de bruit interharmonique (440 ; 550 ; 740 ; 1040 ; 1140) adapté pour recevoir un signal d'entrée, lequel comprend un signal audio préliminaire décodé selon l'un d'une pluralité de modes de décodage, l'activité du post-filtre étant conventionnellement associée à des modes de décodage particuliers, et fournir un signal audio de sortie,
le post-filtre d'atténuation de bruit interharmonique comprenant une section de commande pour exploiter sélectivement le post-filtre dans l'un des modes suivants :

    i) un mode de filtrage, dans lequel il filtre le signal audio préliminaire pour obtenir un signal filtré et fournit celui-ci comme signal audio de sortie ; et
    ii) un mode de passage, dans lequel il fournit le signal audio préliminaire comme signal audio de sortie ;

ladite section de commande étant configurée pour lancer le mode de passage en réponse à la valeur du signal de post-fitrage, moyennant quoi un mode de décodage conventionnellement filtré est appliqué non filtré.

**2.** Post-filtre selon la revendication 1, dans lequel le signal de post-filtrage est inclus dans le signal d'entrée.

**3.** Post-filtre selon la revendication 1, comprenant en outre un module de décision (1120) adapté pour estimer une fréquence fondamentale du signal audio préliminaire et évaluer au moins l'un des critères suivants :

    a) la puissance des composantes spectrales en dessous de la fréquence fondamentale dépasse ou non un seuil prédéterminé ;
    b) les composantes spectrales en dessous de la fréquence fondamentale sont ou non tonales ;
    c) la puissance des composantes spectrales entre les harmoniques de la fréquence fondamentale dépasse ou non un seuil prédéterminé ; et
    d) les composantes spectrales entre les harmoniques de la fréquence fondamentale sont ou non tonales ;

et, en réponse à une détermination positive, décider de générer un signal de post-filtrage négatif qui désactive le post-filtre.

**4.** Système décodeur (400 ; 500 ; 700 ; 1000) pour décoder un signal de flux binaire comme signal temporel audio, comportant :

une section de décodage (410 ; 511, 512, 513 ; 711, 712, 713 ; 1011, 1013) pour décoder un signal de flux binaire comme signal temporel audio préliminaire ; et
le post-filtre d'atténuation de bruit interharmonique selon l'une quelconque des revendications 1 à 3.

**5.** Système décodeur selon la revendication 4,
dans lequel le post-filtre a un gain variable déterminant l'atténuation interharmonique et la section de commande comporte un contrôleur de gain exploitable pour régler la valeur absolue du gain en dessous d'un seuil prédéterminé, moyennant quoi le post-filtre est désactivé.

**6.** Système décodeur selon la revendication 4 ou 5,
dans lequel le post-filtre est adapté pour atténuer uniquement les composantes spectrales qui se trouvent en dessous d'une fréquence de coupure prédéterminée.

**7.** Système décodeur selon la revendication 4,
la section de décodage comprenant en outre une module de décodage à prédiction linéaire à excitation de code, CELP (511 ; 711 ; 1011) et un module de décodage à excitation codée par transformée, TCX, (512 ; 712) pour décoder un signal de flux binaire en tant que signal temporel audio,
la section de commande étant adaptée pour exploiter le système décodeur dans au moins les modes suivants :

a) le module TCX est activé et le psot-filtre est désactivé ;
b) le module CELP et le post-filtre sont activés ; et
c) le module CELP est activé et le post-filtre est désactivé, le signal temporel audio préliminaire et le signal temporel audio coïncidant.

**8.** Système décodeur selon la revendication 6,
la section de décodage comprenant en outre un module de décodage de Codage Audio Avancé, AAC (513 ; 713) pour décoder un signal de flux binaire en tant que signal temporel audio,
la section de commande étant adaptée pour exploiter également le décodeur dans le mode suivant :

d) le module AAC est activé et le post-filtre est désactivé.

**9.** Système décodeur selon la revendication 4, dans lequel le signal de flux binaire est un flux binaire du format MPEG (Moving Pictures Experts Group) et est segmenté en trames temporelles et la section de commande est adaptée pour désactiver une trame temporelle complète ou une séquence de trames temporelles complètes ; et
la section de commande est adaptée en outre pour recevoir, pour chaque trame temporelle, un champ de données associé à cette trame temporelle et est exploitable, en réponse à la valeur du champ de données, pour désactiver le post-filtre, moyennant quoi le signal temporel audio préliminaire est restitué comme signal temporel audio.

**10.** Procédé de décodage d'un signal de flux binaire comme signal temporel audio, comportant les étapes consistant à :

décoder un signal de flux binaire comme signal temporel audio préliminaire dans l'un d'une pluralité de modes de décodage, dans lequel l'activité post-filtre est associée conventionnellement à des modes de décodage particuliers ; et
post-filtrer le signal temporel audio préliminaire en atténuant le bruit interharmonique, obtenant ainsi un signal temporel audio,

**caractérisé en ce que** l'étape de post-filtrage est sélectivement omise en réponse à des informations de post-filtrage codées dans le signal de flux binaire, moyennant quoi un mode de décodage conventionnellement filtré est appliqué non filtré.

**11.** Système codeur (800) pour coder un signal temporel audio en tant que signal de flux binaire, comportant une section de codage (810) exploitable dans plusieurs modes de codage, pour coder un signal temporel audio en tant que signal de flux binaire,
**caractérisé par** une section de décision (820) adaptée pour décider qu'un post-filtrage, qui comporte une atténuation de bruit interharmonique, doit être désactivé ou non au décodage du signal de train binaire séparément de la décision relative au mode de codage et coder cette décision dans le signal de flux binaire en tant qu'information de post-filtrage.

**12.** Système codeur selon la revendication 11,
la section de décision étant adaptée pour :

détecter une coprésence d'une composante de signal d'une fréquence fondamentale prédominante et une composante de signal située en dessous de la fréquence fondamentale, et éventuellement, entre ses harmoniques ; et
en réponse à une détermination positive, décider de procéder à une désactivation.

**13.** Système codeur selon la revendication 11, comprenant en outre un module de codage à prédiction linéaire à excitation de code, CELP, ladite section de codage comportant en outre un module de codage à excitation codée par transformée, TCX,
dans lequel la section de décision est adaptée pour sélectionner l'un des modes de codage suivants, de préférence en fonction d'une optimisation de distorsion de débit :

a) codage TCX ;
b) codage CELP avec post-filtrage ; et
c) codage CELP sans post-filtrage ;

le système codeur comprenant en outre un sélecteur de codage (814) adapté pour sélectionner l'un des super-modes suivants :

i) un Codage Audio Avancé, AAC, dans lequel la section de décision est désactivée ; et
ii) un codage TCX/CELP, dans lequel la section de décision est activée pour sélectionner l'un des modes de codage a), b) et c).

**14.** Procédé de codage d'un signal temporel audio comme signal de flux binaire, le procédé comportant l'étape de codage d'un signal temporel audio comme signal de flux binaire dans l'un de plusieurs modes de codage,
**caractérisé par** l'étape supplémentaire consistant à décider qu'un post-filtrage, comportant une atténuation du bruit interharmonique, doit ou non être désactivé au décodage du signal de flux binaire séparément de la décision relative au mode de codage et à coder cette décision dans le signal de flux binaire comme information de post-filtrage.

**15.** Produit de programme informatique comportant un support de données mémorisant des instructions pour exécuter le procédé selon la revendication 10 ou 14.

Bitstream

Decoder

Post
filter

audio signal

**Fig. 1
(prior art)**

**Fig. 2
(prior art)**

**Fig. 3**

**Fig. 4**

**Fig. 5**

Bitstream

Fig. 6
(prior art)

output audio signal

**Fig. 7**

Audio signal

**Fig. 8**

```
                        ┌─────────────┐
                        │  Bitstream  │
                        └─────────────┘
                               │
          ┌────────────────────┤
          │                    │
          ▼                    ▼
   ┌─────────────┐      ┌─────────────┐
   │     FD      │      │    CELP     │
   │    dec.     │      │    dec.     │
   └─────────────┘      └─────────────┘
          │                    │
          │                    ▼
          │             ┌─────────────┐
          │             │    Post     │
          │             │   filter    │
          │             └─────────────┘
          │                    │
          │                    ▼
          └──────────────►  ╱─────
                            │
                            ▼
                     ┌─────────────┐
                     │             │
                     │     SBR     │
                     │             │
                     └─────────────┘
                            │
                            ▼
                   ┌──────────────────┐
                   │   audio signal   │
                   └──────────────────┘
```

**Fig. 9
(prior art)**

Fig. 10

**Fig. 11**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4969192 A

- WO 9938144 A1

**Non-patent literature cited in the description**

- **R. SCHROEDER ; S. ATAL.** *Proceedings of the IEEE International Conference on Acoustics, Speech, and Signal Processing (ICASSP),* 1985, vol. 10, 937-940

- **CHEN ; GERSHO.** *IEEE Transactions on Speech and Audio Processing,* 1995, vol. 3 (1
- **GHITZA ; GOLDSTEIN.** *IEEE Trans. Acoust., Speech, Signal Processing,* 1986, vol. ASSP-4, 697-708